# EUROPEAN PATENT SPECIFICATION

(11) **EP 3 889 721 B1**
(45) Date of publication and mention of the grant of the patent: **07.08.2024**
(21) Application number: 19902179.1
(22) Date of filing: 27.12.2019
(51) Int. Cl.: B60W 30/08, B60W 30/18, B60W 30/095, B60W 60/00

(54) **OBSTACLE AVOIDANCE METHOD AND SYSTEM DURING AUTOMATIC DRIVING OF VEHICLE, AND VEHICLE**
VERFAHREN UND SYSTEM ZUR HINDERNISVERMEIDUNG BEIM AUTOMATISCHEN FAHREN EINES FAHRZEUGS SOWIE FAHRZEUG
PROCÉDÉ ET SYSTÈME D'ÉVITEMENT D'OBSTACLES PENDANT LA CONDUITE AUTOMATIQUE D'UN VÉHICULE, ET VÉHICULE

(30) Priority: 29.12.2018 CN 201811637024; 29.12.2018 CN 201811637022
(43) Date of publication of application: 06.10.2021
(73) Proprietor: Great Wall Motor Company Limited, Hebei 071000 (CN)
(72) Inventor: WANG, Tianpei, Baoding, Hebei 071000 (CN); CHANG, Shiwei, Baoding, Hebei 071000 (CN); GE, Jianyong, Baoding, Hebei 071000 (CN); GAO, Jian, Baoding, Hebei 071000 (CN); ZHANG, Kai, Baoding, Hebei 071000 (CN); ZHEN, Longbao, Baoding, Hebei 071000 (CN); LIU, Hongwei, Baoding, Hebei 071000 (CN); LIU, Hongliang, Baoding, Hebei 071000 (CN)
(74) Representative: dompatent von Kreisler Selting Werner - Partnerschaft von Patent- und Rechtsanwälten mbB
(86) International application number: PCT/CN2019/129278
(87) International publication number: WO 2020/135738

(56) References cited:
- CN-A- 105 046 960
- CN-A- 106 199 642
- CN-A- 106 228 816
- CN-A- 107 097 790
- CN-A- 108 256 233
- DE-A1- 102016 202 594
- US-A- 5 555 312
- US-A1- 2012 035 788
- US-A1- 2016 339 959

## Description

### FIELD

The present invention relates to the technical field of vehicle automatic driving, and in particular to a method and a system for avoiding obstacles in a vehicle automatic driving process and a vehicle.

### BACKGROUND

Vehicle driverless technology refers to sensing a road environment through a vehicle-mounted sensing system, automatically planning a driving route, and controlling the vehicle to drive. When the vehicle is automatically driven, if an obstacle is located in the current travel lane, obstacle information needs to be acquired and the vehicle is controlled to avoid the obstacle, as disclosed in US 2016/339959 A1. Therefore, there is a need for a technique for avoiding obstacles in an autonomous driving process.

### SUMMARY

In view of the above, a first object of the present invention is to provide a method for avoiding an obstacle in a vehicle automatic driving process. The method can determine whether the vehicle can pass a current lane according to a position and a size of the obstacle in the current lane, so as to control the vehicle to drive.

To achieve the above object, technical solutions are provided by the invention according to independent claim 1.

A method for avoiding an obstacle in a vehicle automatic driving process includes: providing a road environment model within a preset range around a vehicle, wherein the road environment model includes a lane position, a lane width, and a size and a position of the obstacle within the preset range around the vehicle; in a case of a plurality of obstacles within the preset range in a current travel lane, acquiring a position and a size of a first adjacent obstacle, a position and a size of a second adjacent obstacle, a width of the current travel lane, and an obstacle distance between the first adjacent obstacle and the second adjacent obstacle in a driving direction of the current travel lane, and acquiring a speed of the vehicle; and determining whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle, and the obstacle distance; and controlling the vehicle to avoid the obstacle according to a determination result, wherein the first adjacent obstacle is an obstacle closest to the vehicle in the driving direction of the current travel lane, and the second adjacent obstacle is an obstacle closest to the first adjacent obstacle in the driving direction of the current travel lane.

In a possible implementation, the controlling the vehicle to avoid the obstacle according to a determination result includes: in a case that the vehicle is capable to bypass the first adjacent obstacle and the second adjacent obstacle to drive in the current travel lane, controlling the vehicle to avoid the first adjacent obstacle and the second adjacent obstacle to drive in the current travel lane.

In a possible implementation, the controlling the vehicle to avoid the obstacle according to a determination result further includes: in a case that the vehicle is incapable to bypass the first adjacent obstacle and the second adjacent obstacle to drive in the current travel lane, controlling the vehicle to change a lane to avoid the obstacle.

In a possible implementation, the determining whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle and the obstacle distance includes: acquiring a passage width at the first adjacent obstacle according to the position and the size of the first adjacent obstacle and the width of the current travel lane; determining that the vehicle is incapable to bypass the first adjacent obstacle and the second adjacent obstacle to drive in the current travel lane, in a case that the passage width at the first adjacent obstacle is less than the first preset safe passage width; acquiring a passage width at the second adjacent obstacle according to the position and the size of the second adjacent obstacle and the width of the current travel lane, in a case that the passage width at the first adjacent obstacle is greater than the first preset safe passage width; determining that the vehicle is incapable to bypass the first adjacent obstacle and the second adjacent obstacle to drive in the current travel lane, in a case that the passage width at the second adjacent obstacle is less than the first preset safe passage width; acquiring a vehicle position through the first adjacent obstacle and a vehicle position through the second adjacent obstacle, in a case that the passage width at the second adjacent obstacle is greater than the first preset safe passage width; determining whether the vehicle is capable to drive from the vehicle position through the first adjacent obstacle to the vehicle position through the second adjacent obstacle, according to the vehicle position through the first adjacent obstacle, the vehicle position through the second adjacent obstacle, the speed of the vehicle, and the obstacle distance; determining that the vehicle is capable to bypass the first adjacent obstacle and the second adjacent obstacle to drive in the current travel lane, in a case that the vehicle is capable to drive from the vehicle location through the first adjacent obstacle to the vehicle location through the second adjacent obstacle; and determining that the vehicle is incapable to bypass the first adjacent obstacle and the second adjacent obstacle to drive in the current travel lane, in a case that the vehicle is incapable to drive from the vehicle location through the first adjacent obstacle to the vehicle location through the second adjacent obstacle.

In a possible implementation, the determining whether the vehicle is capable to drive from the vehicle position through the first adjacent obstacle to the vehicle position through the second adjacent obstacle, according to the vehicle position through the first adjacent obstacle, the vehicle position through the second adjacent obstacle, the speed of the vehicle, and the obstacle distance includes: setting the vehicle position through the first adjacent obstacle as a starting point, and the vehicle position through the second adjacent obstacle as an end point, determining whether the vehicle is capable to drive at a constant speed or a reduced speed from the start point to the end point at the obstacle distance; determining that the vehicle is capable to drive from the vehicle position through the first adjacent obstacle to the vehicle position through the second adjacent obstacle, if the vehicle is capable to drive at the constant speed or at the reduced speed from the starting point to the end point at the obstacle distance; and determining that the vehicle is incapable to drive from the vehicle position through the first adjacent obstacle to the vehicle position through the second adjacent obstacle, if the vehicle is incapable to drive at the constant speed or at the reduced speed from the starting point to the end point at the obstacle distance.

According to the invention, after the providing a road environment model within a preset range around the vehicle, the method further includes: acquiring the position and the size of the first adjacent obstacle, the position and size of the second adjacent obstacle, the width of the current travel lane according to the road environment model, in the case of the plurality of obstacles within the preset range in the current travel lane; acquiring a comprehensive passage width, according to the position and the size of the first adjacent obstacle, the position and the size of the second adjacent obstacle and the width of the current travel lane; controlling the vehicle to straight drive between the first adjacent obstacle and the second adjacent obstacle, in a case that the comprehensive passage width is less than the second preset safe passage width; wherein in a case that the first adjacent obstacle and the second adjacent obstacle are both close to a same side of the current travel lane, the comprehensive passage width is a smaller value of a passage width at the first adjacent obstacle and a passage width at the second adjacent obstacle; and in a case that the first adjacent obstacle and the second adjacent obstacle are close to different sides of the current travel lane, the comprehensive passage width is a shortest distance between the first adjacent obstacle and the second adjacent obstacle in a left-right direction of the current travel lane.

In a possible implementation, after the providing the road environment model within the preset range around the vehicle, the method further includes: in a case of one obstacle within the preset range in the current travel lane, acquiring a position and a size of the obstacle according to the road environment model, acquiring a lane width of the current travel lane; acquiring a passage width at the obstacle according to the position and the size of the obstacle and the width of the current travel lane; and controlling the vehicle to avoid the obstacle in the current travel lane, in a case that the passage width at the obstacle is greater than a third preset safe passage width.

In a possible implementation, the providing a road environment model within a preset range around the vehicle includes: acquiring position information of the vehicle, a position and a size of the obstacle in the current travel lane, and information on the lane position and the lane width within the preset range around the vehicle; and generating the road environment model according to the position information of the vehicle, the position and the size of the obstacle in the current travel lane, and the information on the lane position and the lane width within the preset range around the vehicle.

Compared with the conventional technology, the method for avoiding the obstacle in the vehicle automatic driving process has the following advantages.

The method for avoiding the obstacle in the vehicle automatic driving process includes: firstly, generating a road environment model within a preset range around the vehicle. Lane lines of all lanes, and a position and a size of an obstacle in the current travel lane are provided in the road environment model. When multiple obstacles are located within an effective detection range of the current lane, whether the vehicle is capable to bypass two obstacles to drive in the current travel lane is determined, according to the passage widths of the two obstacles closest to the vehicle, the obstacle distance between the two obstacles in a driving direction of the vehicle, and the speed of the vehicle, so as to control the vehicle to drive. When only one obstacle is located within the effective detection range of the current travel lane, whether a passage width at the obstacle is available for the vehicle to avoid the obstacle is determined, so as to control the vehicle to drive.

Another object of the present invention is to provide a system for avoiding an obstacle in a vehicle automatic driving process. The system can determine whether the vehicle can pass the current travel lane according to a position and a size of the obstacle in the current travel lane, so as to control the vehicle to drive.

To achieve the above object, the technical solutions are provided by the invention according to the independent claim 8.

A system for avoiding an obstacle in a vehicle automatic driving process includes: a road environment model providing module configured to provide a road environment model within a preset range around a vehicle, wherein the road environment model includes a lane position, a lane width, and a size and a position of the obstacle within the preset range around the vehicle; the control module configured to in a case that a plurality of obstacles within the preset range in a current travel lane is determined according to the road environment model, acquire, according to the road environment model, a position and a size of a first adjacent obstacle, a position and a size of a second adjacent obstacle, a width of the current travel lane, and an obstacle distance between the first adjacent obstacle and the second adjacent obstacle in a driving direction of the current travel lane, and acquire a speed of the vehicle; determine whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle and the obstacle distance; and control the vehicle to avoid the obstacle according to a determination result, wherein the first adjacent obstacle is an obstacle closest to the vehicle in the driving direction of the current travel lane, and the second adjacent obstacle is an obstacle closest to the first adjacent obstacle in the driving direction of the current travel lane.

In a possible implementation, the control module is further configured to control the vehicle to avoid the first adjacent obstacle and the second adjacent obstacle to drive in the current travel lane, in a case that the vehicle is capable to bypass the first adjacent obstacle and the second adjacent obstacle in the current travel lane.

In a possible implementation, the control module is further configured to control the vehicle to change a lane to avoid the obstacle, in a case that the vehicle is incapable to bypass the first adjacent obstacle and the second adjacent obstacle to drive in the current travel lane.

In a possible implementation, the control module is further configured to acquire a passage width at the first adjacent obstacle according to the position and the size of the first adjacent obstacle and the width of the current travel lane; determine that the vehicle is incapable to bypass the first adjacent obstacle and the second adjacent obstacle to drive in the current travel lane, in a case that the passage width at the first adjacent obstacle is less than the first preset safe passage width; acquire a passage width at the second adjacent obstacle according to the position and the size of the second adjacent obstacle and the width of the current travel lane, in a case that the passage width at the first adjacent obstacle is greater than the first preset safe passage width; determine that the vehicle is incapable to bypass the first adjacent obstacle and the second adjacent obstacle to drive in the current travel lane, in a case that the passage width at the second adjacent obstacle is less than the first preset safe passage width; acquire a vehicle position through the first adjacent obstacle and a vehicle position through the second adjacent obstacle, in a case that the passage width at the second adjacent obstacle is greater than the first preset safe passage width; determine whether the vehicle is capable to drive from the vehicle position through the first adjacent obstacle to the vehicle position through the second adjacent obstacle, according to the vehicle position through the first adjacent obstacle, the vehicle position through the second adjacent obstacle, the speed of the vehicle, and the obstacle distance; determine that the vehicle is capable to bypass the first adjacent obstacle and the second adjacent obstacle to drive in the current travel lane, in a case that the vehicle is capable to drive from the vehicle location through the first adjacent obstacle to the vehicle location through the second adjacent obstacle; and determine that the vehicle is incapable to bypass the first adjacent obstacle and the second adjacent obstacle to drive in the current travel lane, in a case that the vehicle is incapable to drive from the vehicle location through the first adjacent obstacle to the vehicle location through the second adjacent obstacle.

In a possible implementation, the control module is further configured to set the vehicle position through the first adjacent obstacle as a starting point, and the vehicle position through the second adjacent obstacle as an end point; determine whether the vehicle is capable to drive at a constant speed or a reduced speed from the starting point to the end point at the obstacle distance; determine that the vehicle is capable to drive from the vehicle location through the first adjacent obstacle to the vehicle location through the second adjacent obstacle, in a case that the vehicle is capable to drive at the constant speed or the reduced speed from the start point to the end point at the obstacle distance; and determine that the vehicle is incapable to drive from the vehicle position through the first adjacent obstacle to the vehicle position through the second adjacent obstacle, in a case that the vehicle is incapable to drive at the constant speed or at the reduced speed from the starting point to the end point at the obstacle distance.

According to the invention, the control module is further configured to acquire the position and the size of the first adjacent obstacle, the position and size of the second adjacent obstacle, the width of the current travel lane according to the road environment model, in the case of the plurality of obstacles within the preset range in the current travel lane; acquire a comprehensive passage width, according to the position and the size of the first adjacent obstacle, the position and the size of the second adjacent obstacle and the width of the current travel lane; and control the vehicle to straight drive between the first adjacent obstacle and the second adjacent obstacle, in a case that the comprehensive passage width is less than a second preset safe passage width, wherein in a case that the first adjacent obstacle and the second adjacent obstacle are both close to a same side of the current travel lane, the comprehensive passage width is a smaller value of a passage width at the first adjacent obstacle and a passage width at the second adjacent obstacle; and in a case that the first adjacent obstacle and the second adjacent obstacle are close to different sides of the current travel lane, the comprehensive passage width is a shortest distance between the first adjacent obstacle and the second adjacent obstacle in a left-right direction of the current travel lane.

In a possible implementation, the control module is further configured to in a case of one obstacle within the preset range in the current travel lane, acquire a position and a size of the obstacle; acquire a passage width at the obstacle according to the position and the size of the obstacle and the width of the current travel lane; and control the vehicle to change a lane, in a case that the passage width at the obstacle is less than a second preset safe passage width.

The system for avoiding the obstacle in the vehicle automatic driving process has the same advantage over the conventional technology as the method for avoiding the obstacle in the vehicle automatic driving process, which will not be further described herein.

Another object of the present invention is to provide a vehicle. The vehicle may determine whether a current travel lane can be passed, according to a position and a size of an obstacle in the current travel lane.

To achieve the above object, the technical solutions of the present invention are implemented as follows.

A vehicle is provided, in which the system for avoiding the obstacle in the vehicle automatic driving process as described in the above embodiment is applied.

The vehicle has the same advantage over the conventional technology as the system for avoiding the obstacle in the vehicle automatic driving process, which will not be further described herein.

### BRIEF DESCRIPTION OF THE DRAWINGS

The accompanying drawings, serve to provide a further understanding of the present invention, and are intended to be illustrative of the present invention and are not intended to be unduly limiting. In the drawings:
FIG. 1 is a flowchart of a method for avoiding an obstacle in a vehicle automatic driving process according to an embodiment;
FIG. 2 is a schematic diagram of two obstacles closest to an ego vehicle in a current travel lane according to an embodiment;
FIG. 3 is a flowchart of a method for avoiding an obstacle in a vehicle automatic driving process according to an embodiment;
FIG. 4 is a schematic diagram of two obstacles closest to an ego vehicle in a current travel lane according to another embodiment;
FIG. 5 is a schematic diagram of two obstacles closest to an ego vehicle in a current travel lane according to yet another embodiment;
FIG. 6 is a schematic diagram of one obstacle in a current travel lane according to an embodiment; and
FIG. 7 is a block diagram of a system for avoiding an obstacle in a vehicle automatic driving process according to an embodiment.

### DETAILED DESCRIPTION

It should be noted that, without conflict, the embodiments and features disclosed herein may be combined with each other.

The present invention will now be described in detail with reference to the accompanying drawings.

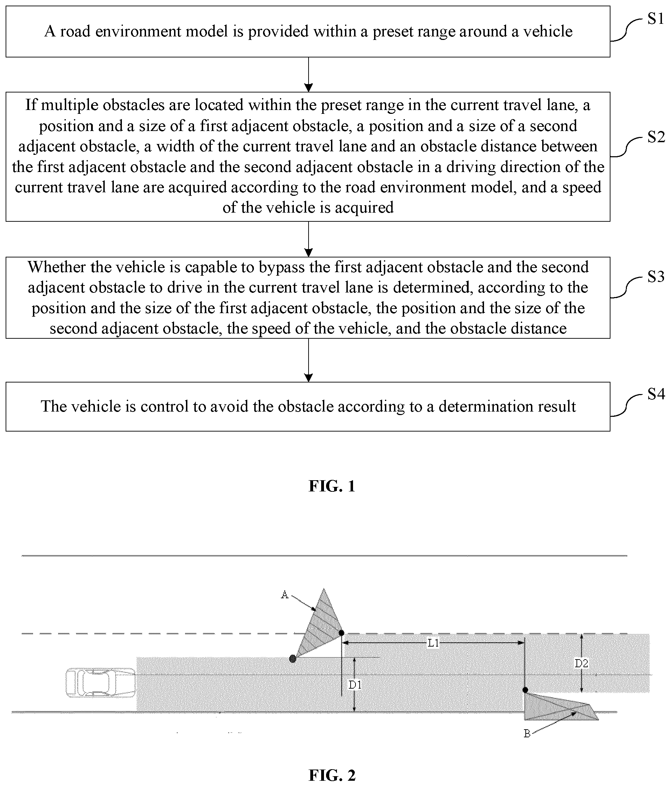

FIG. 1 is a flow chart of a method for avoiding an obstacle in a vehicle automatic driving process according to an embodiment.

As shown in FIG. 1, a method for avoiding an obstacle in a vehicle automatic driving process according to an embodiment of the present invention includes the following steps.

In S1, a road environment model is provided within a preset range around a vehicle. The road environment model includes a lane position and a lane width, and a size and a position of the obstacle within the preset range around the vehicle.

In an embodiment of the present invention, the step S1 specifically includes:
acquiring position information of the vehicle, a position and a size of an obstacle in a current travel lane, and information on a lane position and a lane width within the preset range around the vehicle; and generating the road environment model according to the position information of the vehicle, the position and the size of the obstacle in the current travel lane, and the information on the lane position and the lane width within the preset range around the vehicle.

In particular, the vehicle is provided with an environmental sensing system. Instead of the driver sensory system, the environmental sensing system acquire, by different sensors, current driving environment information, such as, a road, the location of the vehicle, and the size and the location of the obstacle. The above environment information is screened, correlated, tracked, filtered and the like, so as to obtain more accurate information such as road information, and the position and the size of the object target. Finally, the road environment model is generated. The road environment model outputs in real time information on the lane position and lane width within the preset range (e.g., 200 meters) behind and before the vehicle, as well as the sizes and the positions of all vehicles and obstacles within this range.

In S2, if multiple obstacles are located within the preset range in the current travel lane, a position and a size of a first adjacent obstacle, a position and a size of a second adjacent obstacle, a width of the current travel lane and an obstacle distance between the first adjacent obstacle and the second adjacent obstacle in a driving direction of the current travel lane are acquired according to the road environment model, and a speed of the vehicle is acquired. The first adjacent obstacle is an obstacle closest to the vehicle in the driving direction of the current travel lane, and the second adjacent obstacle is an obstacle closest to the first adjacent obstacle in the driving direction of the current travel lane.

FIG. 2 is a schematic diagram of two obstacles closest to an ego vehicle in the current travel lane according to an embodiment of the present invention. As shown in FIG. 2, in an embodiment of the present invention, the obstacle distance between the first adjacent obstacle A and the second adjacent obstacle B is L1.

In S3, whether the vehicle is capable to bypass the first adjacent obstacle and the second adjacent obstacle to drive in the current travel lane is determined, according to the position and the size of the first adjacent obstacle A, the position and the size of the second adjacent obstacle B, the speed of the vehicle, and the obstacle distance L1.

In an embodiment of the present invention, the step S3 specifically includes the following steps.

In S3-1: a passage width D1 at the first adjacent obstacle A is acquired according to the position, the size of the first adjacent obstacle A and the width of the current travel lane.

In S3-2, if the passage width D1 at the first adjacent obstacle A is less than a first preset safe passage width, it is determined that the vehicle is incapable to bypass the first adjacent obstacle A and the second adjacent obstacle B to drive in the current travel lane. The first preset safe passage width is set to ensure that the vehicle can safely pass through a road with the obstacle. For example, the first preset safe passage width is 2.8m (a vehicle width is 2m, and a redundancy width threshold is 0.8m).

In S3-3, if the passage width D1 at the first adjacent obstacle A is greater than the first preset safe passage width, a passage width D2 at the second adjacent obstacle B is acquired according to the position and the size of the second adjacent obstacle B and the width of the current travel lane.

In S3-4, if the passage width D2 at the second adjacent obstacle B is less than the first preset safe passage width, it is determined that the vehicle is incapable to bypass the first adjacent obstacle A and the second adjacent obstacle B to drive in the current travel lane.

In S3-5, if the passage width at the second adjacent obstacle B is greater than the first preset safe passage width, a vehicle position passing through the first adjacent obstacle A and a vehicle position passing through the second adjacent obstacle B are obtained.

In S3-6, according to the vehicle position passing through the first adjacent obstacle A, the vehicle position passing through the second adjacent obstacle B, the speed of the vehicle and the obstacle distance L1, it is determined whether the vehicle can is capable to drive from the vehicle position passing through the first adjacent obstacle A to the vehicle position passing through the second adjacent obstacle B.

In an embodiment of the present invention, the steps S3-6 specifically include the following steps.

In S3-6-1,: the vehicle position passing through the first adjacent obstacle A is set as a starting point, the vehicle position passing through the second adjacent obstacle B is set as an end point, and it is determined whether the vehicle is capable to drive at a constant speed or a reduced speed from the start point to the end point at the obstacle distance.

Specifically, when the first adjacent obstacle A and the second adjacent obstacle B are close to different sides of the current travel lane (as shown in FIG. 2), the starting point is an intermediate point of a passable road (with a lane width D1) of the current travel lane at a boundary point of the first adjacent obstacle A in the driving direction; and the end point is an intermediate point of a passable road (with a lane width D2) of the current travel lane at a closest point of the second adjacent obstacle B in the driving direction.

If the first adjacent obstacle A and the second adjacent obstacle B are close to the same side of the current driving road, the starting point is similarly an intermediate point of a passable road (with a lane width D1) of the current travel lane at a boundary point of the first adjacent obstacle A in the driving direction; and the end point is an intermediate point of a passable road (with a lane width D2) of the current travel lane at a closest point of the second adjacent obstacle B in the driving direction.

In S3-6-2, it is determined that the vehicle is capable to drive from the vehicle position through the first adjacent obstacle to the vehicle position through the second adjacent obstacle, if the vehicle is capable to drive at the constant speed or at the reduced speed from the starting point to the end point at the obstacle distance.

When the first adjacent obstacle A and the second adjacent obstacle B are close to different sides of the left side and the right side of the current travel lane (as shown in FIG. 2), in the case that the speed of the vehicle is controlled, whether the vehicle can drive from the starting point to the end point is determined by controlling the wheel to turn to the obstacle distance L1. Secondly, in the case of controlling the vehicle to decelerate, whether the vehicle can drive from the starting point to the end point is determined by controlling the wheel to turn to the obstacle distance L1. That is, when the speed of the vehicle is not so fast or the obstacle distance L1 is large, the vehicle may avoid the first adjacent obstacle A and the second adjacent obstacle B.

When the first adjacent obstacle A and the second adjacent obstacle B are close to the same side of the left side and the right side of the current driving road, it is only necessary to ensure that the vehicle can pass through a position of the smaller one of the passage width at the first adjacent obstacle A and the passage width at the second adjacent obstacle B, without considering the obstacle distance L1.

In S3-6-3, if the vehicle is incapable to drive at the constant speed or at the reduced speed from the starting point to the end point at the obstacle distance, it is determined that the vehicle is incapable to drive from the vehicle position through the first adjacent obstacle to the vehicle position through the second adjacent obstacle.

In S3-7, if it is determined that the vehicle is capable to drive from the vehicle position through the first adjacent obstacle to the vehicle position through the second adjacent obstacle, it is determined that the vehicle is capable to avoid the first and second adjacent obstacles to drive in the current travel lane.

In S3-8, if it is determined that the vehicle is incapable to drive from the vehicle position through the first adjacent obstacle to the vehicle position through the second adjacent obstacle, it is determined that the vehicle is incapable to bypass the first adjacent obstacle and the second adjacent obstacle in the current travel lane.

In S4, the vehicle is control to avoid the obstacle according to a determination result.

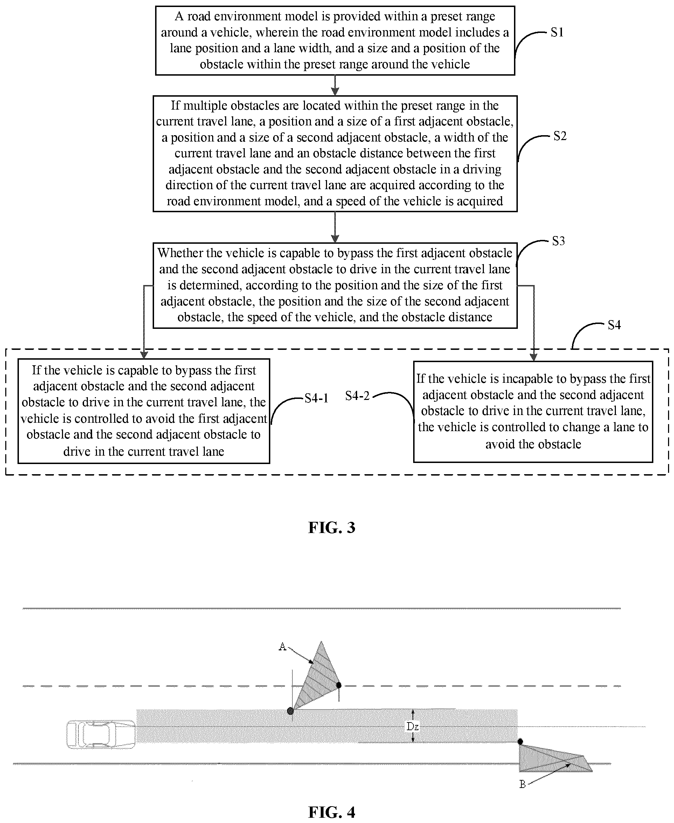

As shown in FIG. 3, in an embodiment of the present invention, the step S4 (i.e., the vehicle is control to avoid the obstacle according to a determination result) further includes: step S4-1: if the vehicle is capable to bypass the first adjacent obstacle and the second adjacent obstacle to drive in the current travel lane, controlling the vehicle to avoid the first adjacent obstacle and the second adjacent obstacle to drive in the current travel lane.

Further, as shown in FIG. 3, the step S4 (i.e., the vehicle is control to avoid the obstacle according to a determination result) further includes: step S4-2, if the vehicle is incapable to bypass the first adjacent obstacle and the second adjacent obstacle to drive in the current travel lane, controlling the vehicle to change a lane to avoid the obstacle.

According to the invention, after the step S1, the method further includes the following steps.

If there are multiple obstacles within the preset range in the current travel lane, the position and the size of the first adjacent obstacle, the position and the size of the second adjacent obstacle and the width of the current travel lane are acquired according to the road environment model.

A comprehensive passage width is acquired according to the position and the size of the first adjacent obstacle, the position and the size of the second adjacent obstacle, and the width of the current travel lane.

FIG. 4 is a schematic diagram of two obstacles closest to an ego vehicle in a current travel lane according to the present invention. As shown in FIG. 4, when the first adjacent obstacle A and the second adjacent obstacle B are close to different sides of the left side and the right side of the current travel lane, the comprehensive passage width Dz is a shortest distance between the first adjacent obstacle A and the second adjacent obstacle B in the current travel lane in a direction perpendicular to the driving direction. When Dz > the second preset safe passage width, the vehicle is controlled to straight drive between the first adjacent obstacle A and the second adjacent obstacle B.

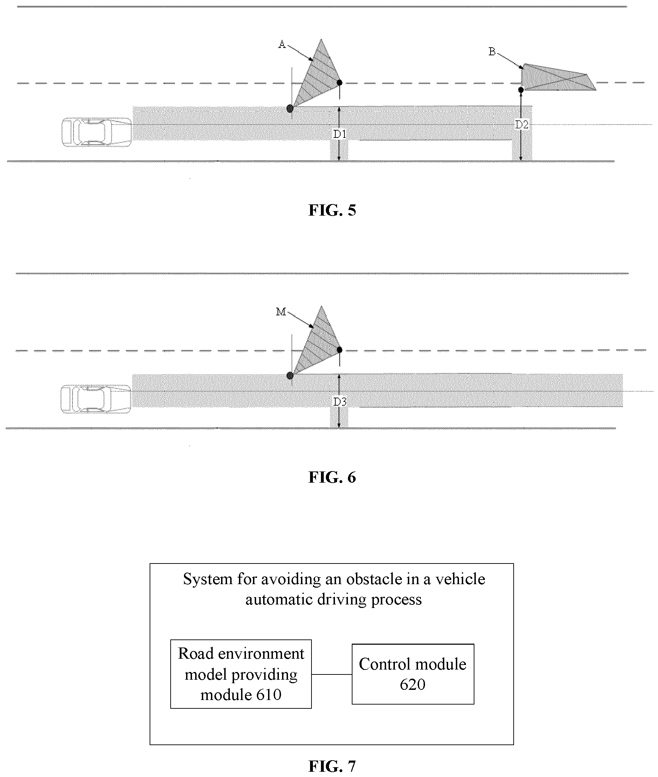

FIG. 5 is a schematic diagram of two obstacles closest to an ego vehicle in a current travel lane according to the present invention. As shown in FIG. 5, when the first adjacent obstacle A and the second adjacent obstacle B are both close to the same side of the current travel lane, the comprehensive passage width is a smaller one of the first passage width D1 and the second passage width D2. In this example, the comprehensive passage width is D1, and the vehicle is controlled to straight drive between the first adjacent obstacle A and the second adjacent obstacle B.

If the comprehensive passage width is greater than the second preset safe passage width, the vehicle is controlled to straight drive between the first adjacent obstacle and the second adjacent obstacle. The second preset safe passage width is set to ensure that the vehicle can safely pass through the road at the obstacle. In an example, the second preset safe passage width is 2.8m (a vehicle width is 2m, and a redundancy width threshold is 0.8m).

FIG. 6 is a schematic diagram of one obstacle in a current travel lane according to an embodiment of the present invention. As shown in FIG. 6, in an embodiment of the present invention, after the step S1, the method further includes: if one obstacle M is located in the current travel lane within the preset range, a position and a size of the obstacle, and the lane width of the current travel lane are acquired. According to the position and the size of the obstacle M and the lane width of the current travel lane, a passage width D3 at the obstacle M is acquired. If D3 is greater than the third preset safe passage width, the vehicle is controlled to avoid the obstacle M in the current lane. In an example, the third preset safe passage width is 2.8m (the vehicle width is 2m, and the redundancy width threshold is 0.8m).

The method for avoiding the obstacle in the vehicle automatic driving process includes: firstly, generating a road environment model within a preset range around the vehicle. Lane lines of all lanes, and a position and a size of an obstacle in the current travel lane are provided on the road environment model. When multiple obstacles are located in the effective detection range of the current lane, whether the vehicle is capable to bypass two obstacles to drive in the current travel lane is determined, according to the passage widths of the two obstacles closest to the vehicle, the obstacle distance between the two obstacles in a driving direction of the vehicle, and the speed of the vehicle, so as to control the vehicle to drive. When only one obstacle is located within the effective detection range of the current travel lane, whether a passage width at the obstacle is available for the vehicle to avoid the obstacle is determined, so as to control the vehicle to drive.

FIG. 7 is a block diagram of a system for avoiding an obstacle in a vehicle automatic driving process according to an embodiment of the present invention. As shown in FIG. 7, a system for avoiding an obstacle in a vehicle automatic driving process according to an embodiment of the present invention includes a road environment model providing module 610 and a control module 620.

The road environment model providing module 610 is configured to provide a road environment model within a preset range around the vehicle. The road environment model includes a lane location and a lane width, and a size and a position of the obstacle within a preset range around the vehicle. The control module 620 is configured to when multiple obstacles within the preset range in a current travel lane are determined according to the road environment model, acquire, according to the road environment model, a position and a size of a first adjacent obstacle, a position and a size of a second adjacent obstacle, a width of the current travel lane, and an obstacle distance between the first adjacent obstacle and the second adjacent obstacle in a driving direction of the current travel lane, and acquire a speed of the vehicle; determine whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle and the obstacle distance; and control the vehicle to avoid the obstacle according to a determination result. The first adjacent obstacle is an obstacle closest to the vehicle in the driving direction of the current travel lane, and the second adjacent obstacle is an obstacle closest to the first adjacent obstacle in the driving direction of the current travel lane.

In an embodiment of the present invention, the control module 620 is specifically configured to control the vehicle to avoid the first adjacent obstacle and the second adjacent obstacle in the current travel lane when the vehicle is capable to bypass the first adjacent obstacle and the second adjacent obstacle in the current travel lane.

In an embodiment of the present invention, the control module 620 is specifically configured to control the vehicle to change a lane to avoid the obstacle, when the vehicle is incapable to bypass the first and second adjacent obstacles to drive in the current travel lane.

In an embodiment of the present invention, the control module 620 is specifically configured to obtain a passage width at the first adjacent obstacle according to the position and the size of the first adjacent obstacle and the width of the current travel lane; determine that the vehicle is incapable to bypass the first adjacent obstacle and the second adjacent obstacle to drive in the current travel lane, in a case that the passage width at the first adjacent obstacle is less than the first preset safe passage width; acquire a passage width at the second adjacent obstacle according to the position and the size of the second adjacent obstacle and the width of the current travel lane, in a case that the passage width at the first adjacent obstacle is greater than the first preset safe passage width; determine that the vehicle is incapable to bypass the first adjacent obstacle and the second adjacent obstacle to drive in the current travel lane, in a case that the passage width at the second adjacent obstacle is less than the first preset safe passage width; acquire a vehicle position through the first adjacent obstacle and a vehicle position through the second adjacent obstacle, in a case that the passage width at the second adjacent obstacle is greater than the first preset safe passage width; determine whether the vehicle is capable to drive from the vehicle position through the first adjacent obstacle to the vehicle position through the second adjacent obstacle, according to the vehicle position through the first adjacent obstacle, the vehicle position through the second adjacent obstacle, the speed of the vehicle, and the obstacle distance; determine that the vehicle is capable to bypass the first adjacent obstacle and the second adjacent obstacle to drive in the current travel lane, in a case that the vehicle is capable to drive from the vehicle location through the first adjacent obstacle to the vehicle location through the second adjacent obstacle; and determine that the vehicle is incapable to bypass the first adjacent obstacle and the second adjacent obstacle to drive in the current travel lane, in a case that the vehicle is incapable to drive from the vehicle location through the first adjacent obstacle to the vehicle location through the second adjacent obstacle.

In an embodiment of the present invention, the control module 620 is further configured to set the vehicle position through the first adjacent obstacle as a starting point, and the vehicle position through the second adjacent obstacle as an end point; determine whether the vehicle is capable to drive at a constant speed or a reduced speed from the starting point to the end point at the obstacle distance; determine that the vehicle is capable to drive from the vehicle position through the first adjacent obstacle to the vehicle position through the second adjacent obstacle, if the vehicle is capable to drive at the constant speed or the reduced speed from the start point to the end point at the obstacle distance; and determine that the vehicle incapable to drive from the vehicle position through the first adjacent obstacle to the vehicle position through the second adjacent obstacle, if the vehicle is incapable to drive at the constant speed or the reduced speed from the start point to the end point at the obstacle distance.

In an embodiment of the present invention, the control module 620 is further configured to acquire the position and the size of the first adjacent obstacle, the position and size of the second adjacent obstacle, the width of the current travel lane according to the road environment model, in the case of multiple obstacles within the preset range in the current travel lane; acquire a comprehensive passage width, according to the position and the size of the first adjacent obstacle, the position and the size of the second adjacent obstacle and the width of the current travel lane; control the vehicle to straight drive between the first adjacent obstacle and the second adjacent obstacle, in a case that the comprehensive passage width is greater than the second preset safe passage width. When the first adjacent obstacle and the second adjacent obstacle are both close to the same side of the current travel lane, the comprehensive passage width is a smaller value of a passage width at the first adjacent obstacle and a passage width at the second adjacent obstacle. When the first adjacent obstacle and the second adjacent obstacle are close to different sides of the current travel lane, the comprehensive passage width is a shortest distance between the first adjacent obstacle and the second adjacent obstacle in a left-right direction of the current travel lane.

In an embodiment of the present invention, the control module 620 is further configured to in a case of one obstacle within the preset range in the current travel lane, acquire a position and a size of the obstacle, acquire a passage width at the obstacle according to the position and the size of the obstacle and the width of the current travel lane, and control the vehicle to change a lane, in a case that the passage width at the obstacle is less than the second preset safe passage width.

In the system for avoiding the obstacle in the vehicle automatic driving process, a road environment model within a preset range around the vehicle is generated. Lane lines of all lanes, and a position and a size of an obstacle in the current travel lane are provided in the road environment model. When multiple obstacles are located within the effective detection range of the current lane, whether the vehicle is capable to bypass two obstacles to drive in the current travel lane is determined, according to the passage widths of the two obstacles closest to the vehicle, the obstacle distance between the two obstacles in a driving direction of the vehicle, and the speed of the vehicle, so as to control the vehicle to drive. When only one obstacle is located in the effective detection range of the current travel lane, whether a passage width at the obstacle is available for the vehicle to avoid the obstacle is determined, so as to control the vehicle to drive.

It should be noted that the specific implementation mode of the system for avoiding the obstacle in the vehicle automatic driving process according to the embodiment of the invention is similar to the specific implementation mode of the method for avoiding the obstacle in the vehicle automatic driving process according to the embodiment of the present invention. The specific description can refer to the description of the method embodiment. In order to reduce the redundancy, the description is not repeated herein.

Further, a vehicle is provided according to an embodiment of the present invention, in which the system for avoiding the obstacle in the vehicle automatic driving process in any one of the above embodiments is applied. The vehicle may determine whether a current travel lane can be passed, according to a position and a size of an obstacle in the current travel lane.

In addition, other configurations and effects of vehicles according to embodiments of the present invention are known to those of ordinary skill in the art, which will not be repeated herein to reduce redundancy.

The above description only shows preferred embodiments of the present invention, which will not be used to limit the invention. The protection scope of the invention is defined by the appended claims.

## Claims

1. A method for avoiding obstacles in a vehicle automatic driving process, comprising:
providing a road environment model within a preset range around a vehicle, wherein the road environment model comprises a lane position, a lane width, and a size and a position of the obstacles within the preset range around the vehicle;
in a case of a plurality of obstacles within the preset range in a current travel lane, acquiring a position and a size of a first adjacent obstacle, a position and a size of a second adjacent obstacle, a width of the current travel lane, and an obstacle distance between the first adjacent obstacle and the second adjacent obstacle in a driving direction of the current travel lane, according to the road environment model; and acquiring a speed of the vehicle;
determining whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle, and the obstacle distance; and
controlling the vehicle to avoid the obstacles according to a determination result,
wherein the first adjacent obstacle is an obstacle closest to the vehicle in the driving direction of the current travel lane, and the second adjacent obstacle is an obstacle closest to the first adjacent obstacle in the driving direction of the current travel lane;
**characterized in that** the method further comprises:
acquiring a comprehensive passage width, according to the position and the size of the first adjacent obstacle, the position and the size of the second adjacent obstacle and the width of the current travel lane;
controlling the vehicle to straight drive between the first adjacent obstacle and the second adjacent obstacle, in a case that the comprehensive passage width is greater than a second preset safe passage width;
wherein in a case that the first adjacent obstacle and the second adjacent obstacle are both close to a same side of the current travel lane, the comprehensive passage width is a smaller value of a passage width at the first adjacent obstacle and a passage width at the second adjacent obstacle; and in a case that the first adjacent obstacle and the second adjacent obstacle are close to different sides of the current travel lane, the comprehensive passage width is a shortest distance between the first adjacent obstacle and the second adjacent obstacle in a left-right direction of the current travel lane.

2. The method for avoiding the obstacles in the vehicle automatic driving process as claimed in claim 1, wherein the controlling the vehicle to avoid the obstacle according to a determination result comprises:
in a case that the vehicle is capable to bypass the first adjacent obstacle and the second adjacent obstacle to drive in the current travel lane, controlling the vehicle to avoid the first adjacent obstacle and the second adjacent obstacle to drive in the current travel lane.

3. The method for avoiding the obstacles in the vehicle automatic driving process as claimed in claim 1 or 2, wherein the controlling the vehicle to avoid the obstacles according to a determination result further comprises:
in a case that the vehicle is incapable to bypass the first adjacent obstacle and the second adjacent obstacle to drive in the current travel lane, controlling the vehicle to change an lane to avoid the obstacle.

4. The method for avoiding the obstacles in the vehicle automatic driving process as claimed in any one of claims 1 to 3, wherein the determining whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle, and the obstacle distance further comprises:
acquiring a passage width at the first adjacent obstacle according to the position and the size of the first adjacent obstacle and the width of the current travel lane;
determining that the vehicle is incapable to bypass the first adjacent obstacle and the second adjacent obstacle to drive in the current travel lane, in a case that the passage width at the first adjacent obstacle is less than the first preset safe passage width;
acquiring a passage width at the second adjacent obstacle according to the position and the size of the second adjacent obstacle and the width of the current travel lane, in a case that the passage width at the first adjacent obstacle is greater than the first preset safe passage width;
determining that the vehicle is incapable to bypass the first adjacent obstacle and the second adjacent obstacle to drive in the current travel lane, in a case that the passage width at the second adjacent obstacle is less than a first preset safe passage width;
acquiring a position of the vehicle passing the first adjacent obstacle and a position of the vehicle passing the second adjacent obstacle, in a case that the passage width at the second adjacent obstacle is greater than the first preset safe passage width;
determining whether the vehicle is capable to drive from the position of the vehicle passing the first adjacent obstacle to the position of the vehicle passing the second adjacent obstacle, according to the position of the vehicle passing the first adjacent obstacle, the position of the vehicle passing the second adjacent obstacle, the speed of the vehicle, and the obstacle distance;
determining that the vehicle is capable to bypass the first adjacent obstacle and the second adjacent obstacle to drive in the current travel lane, in a case that the vehicle is capable to drive from the position of the vehicle passing the first adjacent obstacle to the position of the vehicle passing the second adjacent obstacle; and
determining that the vehicle is incapable to bypass the first adjacent obstacle and the second adjacent obstacle to drive in the current travel lane, in a case that the vehicle is incapable to drive from the position of the vehicle passing the first adjacent obstacle to the position of the vehicle passing the second adjacent obstacle.

5. The method for avoiding the obstacles in the vehicle automatic driving process as claimed in claim 4, wherein the determining whether the vehicle is capable to drive from the position of the vehicle passing the first adjacent obstacle to the position of the vehicle passing the second adjacent obstacle, according to the position of the vehicle passing the first adjacent obstacle, the position of the vehicle passing the second adjacent obstacle, the speed of the vehicle, and the obstacle distance further comprises:
setting the position of the vehicle passing the first adjacent obstacle as a starting point, and the position of the vehicle passing the second adjacent obstacle as an end point, and determining whether the vehicle is capable to drive at a constant speed or a reduced speed from the starting point to the end point at the obstacle distance;
determining that the vehicle is capable to drive from the position of the vehicle passing the first adjacent obstacle to the position of the vehicle passing the second adjacent obstacle, in a case that the vehicle is capable to drive at the constant speed or at the reduced speed from the starting point to the end point at the obstacle distance; and
determining that the vehicle is incapable to drive from the vehicle passing the first adjacent obstacle to the vehicle passing the second adjacent obstacle, in a case that the vehicle is incapable to drive at the constant speed or at the reduced speed from the starting point to the end point at the obstacle distance.

6. The method for avoiding the obstacles in the vehicle automatic driving process as claimed in any one of claims 1 to 5, wherein after the providing the road environment model within the preset range around the vehicle, the method further comprises:
in a case of one obstacle within the preset range in the current travel lane, acquiring a position and a size of the obstacle according to the road environment model, and acquiring a lane width of the current travel lane;
acquiring a passage width at the obstacle according to the position and the size of the obstacle and the width of the current travel lane; and
controlling the vehicle to avoid the obstacle in the current travel lane, in a case that the passage width at the obstacle is greater than a third preset safe passage width.

7. The method for avoiding the obstacles in the vehicle automatic driving process as claimed in any one of claims 1 to 6, wherein the providing the road environment model within the preset range around the vehicle further comprises:
acquiring position information of the vehicle, a position and a size of the obstacle in the current travel lane, and information on the lane position and the lane width within the preset range around the vehicle; and
generating the road environment model according to the position information of the vehicle, the position and the size of the obstacle in the current travel lane, and the information on the lane position and the lane width within the preset range around the vehicle.

8. A system for avoiding an obstacles in a vehicle automatic driving process, comprising:
a road environment model providing module configured to provide a road environment model within a preset range around the vehicle, wherein the road environment model comprises a lane position, a lane width, and a size and a position of the obstacle within the preset range around the vehicle; and
a control module configured to in a case that a plurality of obstacles within the preset range in a current travel lane is determined according to the road environment model, acquire, according to the road environment model, a position and a size of a first adjacent obstacle, a position and a size of a second adjacent obstacle, a width of the current travel lane, and an obstacle distance between the first adjacent obstacle and the second adjacent obstacle in a driving direction of the current travel lane, and acquire a speed of the vehicle; determine whether the vehicle is capable to bypass the first adjacent obstacle and the second adjacent obstacle to drive in the current travel lane, according to the position and the size of the first adjacent obstacle, the position and the size of the second adjacent obstacle, the speed of the vehicle and the obstacle distance; and control the vehicle to avoid the obstacle according to a determination result,
wherein the first adjacent obstacle is an obstacle closest to the vehicle in the driving direction of the current travel lane, and the second adjacent obstacle is an obstacle closest to the first adjacent obstacle in the driving direction of the current travel lane;
**characterized in that** the control module is further configured to
acquire a comprehensive passage width, according to the position and the size of the first adjacent obstacle, the position and the size of the second adjacent obstacle and the width of the current travel lane; and control the vehicle to straight drive between the first adjacent obstacle and the second adjacent obstacle, in a case that the comprehensive passage width is greater than a second preset safe passage width,
wherein in a case that the first adjacent obstacle and the second adjacent obstacle are both close to a same side of the current travel lane, the comprehensive passage width is a smaller value of a passage width at the first adjacent obstacle and a passage width at the second adjacent obstacle; and in a case that the first adjacent obstacle and the second adjacent obstacle are close to different sides of the current travel lane, the comprehensive passage width is a shortest distance between the first adjacent obstacle and the second adjacent obstacle in a left-right direction of the current travel lane.

9. The system for avoiding the obstacles in the vehicle automatic driving process as claimed in claim 8, wherein the control module is further configured to control the vehicle to avoid the first adjacent obstacle and the second adjacent obstacle to drive in the current travel lane, in a case that the vehicle is capable to bypass the first adjacent obstacle and the second adjacent obstacle in the current travel lane, wherein the control module is further configured to control the vehicle to change a lane to avoid the obstacle, in a case that the vehicle is incapable to bypass the first adjacent obstacle and the second adjacent obstacle to drive in the current travel lane.

10. The system for avoiding the obstacles in the vehicle automatic driving process as claimed in any one of claims 8 to 9, wherein the control module is further configured to acquire a passage width at the first adjacent obstacle according to the position and the size of the first adjacent obstacle and the width of the current travel lane; determine that the vehicle is incapable to bypass the first adjacent obstacle and the second adjacent obstacle to drive in the current travel lane, in a case that the passage width at the first adjacent obstacle is less than the first preset safe passage width; acquire a passage width at the second adjacent obstacle according to the position and the size of the second adjacent obstacle and the width of the current travel lane, in a case that the passage width at the first adjacent obstacle is greater than the first preset safe passage width; determine that the vehicle is incapable to bypass the first adjacent obstacle and the second adjacent obstacle to drive in the current travel lane, in a case that the passage width at the second adjacent obstacle is less than the first preset safe passage width; acquire a position of the vehicle passing the first adjacent obstacle and a position of the vehicle passing the second adjacent obstacle, in a case that the passage width at the second adjacent obstacle is greater than the first preset safe passage width; determine whether the vehicle is capable to drive from the position of the vehicle passing the first adjacent obstacle to the position of the vehicle passing the second adjacent obstacle, according to the position of the vehicle passing the first adjacent obstacle, the position of the vehicle passing the second adjacent obstacle, the speed of the vehicle, and the obstacle distance; determine that the vehicle is capable to bypass the first adjacent obstacle and the second adjacent obstacle to drive in the current travel lane, in a case that the vehicle is capable to drive from the position of the vehicle passing the first adjacent obstacle to the position of the vehicle passing the second adjacent obstacle; and determine that the vehicle is incapable to bypass the first adjacent obstacle and the second adjacent obstacle to drive in the current travel lane, in a case that the vehicle is incapable to drive from the position of the vehicle passing the first adjacent obstacle to the position of the vehicle passing the second adjacent obstacle.

11. The system for avoiding the obstacles in the vehicle automatic driving process as claimed in claim 10, wherein the control module is further configured to set the position of the vehicle passing the first adjacent obstacle as a starting point, and the position of the vehicle passing the second adjacent obstacle as an end point; determine whether the vehicle is capable to drive at a constant speed or a reduced speed from the starting point to the end point at the obstacle distance; determine that the vehicle is capable to drive from the position of the vehicle passing the first adjacent obstacle to the position of the vehicle passing the second adjacent obstacle, in a case that the vehicle is capable to drive at the constant speed or the reduced speed from the starting point to the end point at the obstacle distance; and determine that the vehicle is incapable to drive from the position of the vehicle passing the first adjacent obstacle to the position of the vehicle passing the second adjacent obstacle, in a case that the vehicle is incapable to drive at the constant speed or at the reduced speed from the starting point to the end point at the obstacle distance.

12. The system for avoiding the obstacles in the vehicle automatic driving process as claimed in any one of claims 8 to 11, the control module is further configured to in a case of one obstacle within the preset range in the current travel lane, acquire a position and a size of the obstacle; acquire a passage width at the obstacle according to the position and the size of the obstacle and the width of the current travel lane; and control the vehicle to change a lane, in a case that the passage width at the obstacle is less than the second preset safe passage width.

13. A vehicle, comprising the system for avoiding the obstacles in the vehicle automatic driving process as claimed in any one of claims 8 to 12.

## Patentansprüche

1. Verfahren zum Ausweichen vor Hindernissen in einem automatischen Fahrzeugfahrvorgang, das umfasst:
Bereitstellen eines Straßenumgebungsmodells innerhalb eines vorbestimmten Bereichs um ein Fahrzeug, wobei das Straßenumgebungsmodell eine Spurposition, eine Spurbreite, und eine Größe und eine Position der Hindernisse innerhalb des vorbestimmten Bereichs um das Fahrzeug umfasst;
bei einer Vielzahl von Hindernissen innerhalb des vorbestimmten Bereichs auf einer aktuellen Fahrspur, Erfassen einer Position und einer Größe eines ersten angrenzenden Hindernisses, einer Position und einer Größe eines zweiten angrenzenden Hindernisses, einer Breite der aktuellen Fahrspur, und einer Hindernisentfernung zwischen dem ersten angrenzenden Hindernis und dem zweiten angrenzenden Hindernis in einer Fahrtrichtung der aktuellen Fahrspur entsprechend dem Straßenumgebungsmodell; und Erfassen einer Geschwindigkeit des Fahrzeugs;
Bestimmen, ob das Fahrzeug das erste angrenzende Hindernis und das zweite angrenzende Hindernis umfahren kann, um auf der aktuellen Fahrspur zu fahren, entsprechend der Position und der Größe des ersten angrenzenden Hindernisses, der Position und der Größe des zweiten angrenzenden Hindernisses, der Geschwindigkeit des Fahrzeugs, und der Hindernisentfernung; und
Steuern des Fahrzeugs zum Ausweichen vor den Hindernissen entsprechend einem Bestimmungsergebnis,
wobei das erste angrenzende Hindernis ein Hindernis ist, das dem Fahrzeug in der Fahrtrichtung der aktuellen Fahrspur am nächsten ist, und das zweite angrenzende Hindernis ein Hindernis ist, das dem ersten angrenzenden Hindernis in der Fahrtrichtung der aktuellen Fahrspur am nächsten ist;
**dadurch gekennzeichnet, dass** das Verfahren ferner umfasst:
Erfassen einer umfassende Durchgangsbreite entsprechend der Position und der Größe des ersten angrenzenden Hindernisses, der Position und der Größe des zweiten angrenzenden Hindernisses, und der Breite der aktuellen Fahrspur;
Steuern des Fahrzeugs so, dass es zwischen dem ersten angrenzenden Hindernis und dem zweiten angrenzenden Hindernis gerade fährt, wenn die umfassende Durchgangsbreite größer als eine zweite vorbestimmte sichere Durchgangsbreite ist;
wobei, wenn das erste angrenzende Hindernis und das zweite angrenzende Hindernis beide in der Nähe einer gleichen Seite der aktuellen Fahrspur liegen, die umfassende Durchgangsbreite einer kleinerer Wert einer Durchgangsbreite am ersten angrenzenden Hindernis und einer Durchgangsbreite am zweiten angrenzenden Hindernis ist; und wenn das erste angrenzende Hindernis und das zweite angrenzenden Hindernis in der Nähe von unterschiedlichen Seiten der aktuellen Fahrspur liegen, die umfassende Durchgangsbreite eine kürzeste Entfernung zwischen dem ersten angrenzenden Hindernis und dem zweiten angrenzenden Hindernis in einer von links nach rechts verlaufenden Richtung der aktuellen Fahrspur ist.

2. Verfahren zum Ausweichen vor Hindernissen in dem automatischen Fahrzeugfahrvorgang nach Anspruch 1, wobei das Steuern des Fahrzeugs zum Ausweichen vor dem Hindernis entsprechend einem Bestimmungsergebnis umfasst:
wenn das Fahrzeug das erste angrenzende Hindernis und das zweite angrenzende Hindernis umfahren kann, um auf der aktuellen Fahrspur zu fahren, Steuern des Fahrzeugs zum Ausweichen vor dem ersten angrenzenden Hindernis und dem zweiten angrenzenden Hindernis, um auf der aktuellen Fahrspur zu fahren.

3. Verfahren zum Ausweichen vor Hindernissen in dem automatischen Fahrzeugfahrvorgang nach Anspruch 1 oder 2, wobei das Steuern des Fahrzeugs zum Ausweichen vor den Hindernissen entsprechend einem Bestimmungsergebnis ferner umfasst:
wenn das Fahrzeug das erste angrenzende Hindernis und das zweite angrenzende Hindernis nicht umfahren kann, um auf der aktuellen Fahrspur zu fahren, Steuern des Fahrzeugs zum Wechseln einer Spur, um dem Hindernis auszuweichen.

4. Verfahren zum Ausweichen vor Hindernissen in dem automatischen Fahrzeugfahrvorgang nach einem der Ansprüche 1 bis 3, wobei das Bestimmen, ob das Fahrzeug das erste angrenzende Hindernis und das zweite angrenzende Hindernis umfahren kann, um auf der aktuellen Fahrspur zu fahren, entsprechend der Position und der Größe des ersten angrenzenden Hindernisses, der Position und der Größe des zweiten angrenzenden Hindernisses, der Geschwindigkeit des Fahrzeugs, und der Hindernisentfernung ferner umfasst:
Erfassen einer Durchgangsbreite an dem ersten angrenzenden Hindernis entsprechend der Position und der Größe des ersten angrenzenden Hindernisses und der Breite der aktuellen Fahrspur;
Bestimmen, dass das Fahrzeug das erste angrenzende Hindernis und das zweite angrenzende Hindernis nicht umfahren kann, um auf der aktuellen Fahrspur zu fahren, wenn die Durchgangsbreite an dem ersten angrenzenden Hindernis kleiner als die erste vorbestimmte sichere Durchgangsbreite ist;
Erfassen einer Durchgangsbreite an dem zweiten angrenzenden Hindernis entsprechend der Position und der Größe des zweiten angrenzenden Hindernisses und der Breite der aktuellen Fahrspur, wenn die Durchgangsbreite an dem ersten angrenzenden Hindernis größer als die erste vorbestimmte sichere Durchgangsbreite ist;
Bestimmen, dass das Fahrzeug das erste angrenzende Hindernis und das zweite angrenzende Hindernis nicht umfahren kann, um auf der aktuellen Fahrspur zu fahren, wenn die Durchgangsbreite an dem zweiten angrenzenden Hindernis kleiner als die erste vorbestimmte sichere Durchgangsbreite ist;
Erfassen einer Position des Fahrzeugs, das am den ersten angrenzenden Hindernis vorbeifährt, und einer Position des Fahrzeugs, das an dem zweiten angrenzenden Hindernis vorbeifährt, wenn die Durchgangsbreite an dem zweiten angrenzenden Hindernis größer als die erste vorbestimmte sichere Durchgangsbreite ist;
Bestimmen, ob das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann, entsprechend der Position des Fahrzeugs, das an dem ersten angrenzenden Hindernis vorbeifährt, der Position des Fahrzeugs, das an dem zweiten angrenzenden Hindernis vorbeifährt, der Geschwindigkeit des Fahrzeugs, und der Hindernisentfernung;
Bestimmen, dass das Fahrzeug das erste angrenzende Hindernis und das zweite angrenzende Hindernis umfahren kann, um auf der aktuellen Fahrspur zu fahren, wenn das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann; und
Bestimmen, dass das Fahrzeug das erste angrenzende Hindernis und das zweite angrenzende Hindernis nicht umfahren kann, um auf der aktuellen Fahrspur zu fahren, wenn das Fahrzeug nicht von der Position des Fahrzeugs, das an dem ersten angrenzenden Hindernis vorbeifährt, zur Position des Fahrzeugs, das an dem zweiten angrenzenden Hindernis vorbeifährt, fahren kann.

5. Verfahren zum Ausweichen vor Hindernissen in dem automatischen Fahrzeugfahrvorgang nach Anspruch 4, wobei das Bestimmen, ob das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann, entsprechend der Position des Fahrzeugs, das an dem ersten angrenzenden Hindernis vorbeifährt, der Position des Fahrzeugs, das an dem zweiten angrenzenden Hindernis vorbeifährt, der Geschwindigkeit des Fahrzeugs, und der Hindernisentfernung ferner umfasst:
Festlegen der Position des Fahrzeugs, das an dem ersten angrenzenden Hindernis vorbeifährt, als einen Startpunkt, und der Position des Fahrzeugs, das an dem zweiten angrenzenden Hindernis vorbeifährt, als einen Endpunkt, und Bestimmen, ob das Fahrzeug mit einer konstanten Geschwindigkeit oder einer reduzierten Geschwindigkeit vom Startpunkt zum Endpunkt in der Hindernisentfernung fahren kann;
Bestimmen, dass das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann, wenn das Fahrzeug mit der konstanten Geschwindigkeit oder der reduzierten Geschwindigkeit vom Startpunkt zum Endpunkt in der Hindernisentfernung fahren kann; und
Bestimmen, dass das Fahrzeug nicht von der Position des Fahrzeugs, das an dem ersten angrenzenden Hindernis vorbeifährt, zur Position des Fahrzeugs, das an dem zweiten angrenzenden Hindernis vorbeifährt, fahren kann, wenn das Fahrzeug nicht mit der konstanten Geschwindigkeit oder der reduzierte Geschwindigkeit vom Startpunkt zum Endpunkt in der Hindernisentfernung fahren kann.

6. Verfahren zum Ausweichen vor Hindernissen in dem automatischen Fahrzeugfahrvorgang nach einem der Ansprüche 1 bis 5, wobei das Verfahren nach dem Bereitstellen des Straßenumgebungsmodells innerhalb des vorbestimmten Bereichs um das Fahrzeug ferner umfasst:
bei einem Hindernis innerhalb des vorbestimmten Bereichs auf der aktuellen Fahrspur, Erfassen einer Position und einer Größe des Hindernisses entsprechend dem Straßenumgebungsmodell, und Erfassen einer Spurbreite der aktuellen Fahrspur;
Erfassen einer Durchgangsbreite an dem Hindernis entsprechend der Position und der Größe des Hindernisses und der Breite der aktuellen Fahrspur; und
Steuern des Fahrzeugs zum Ausweichen vor dem Hindernis auf der aktuellen Fahrspur, wenn die Durchgangsbreite am Hindernis größer als eine dritte vorbestimmte sichere Durchgangsbreite ist.

7. Verfahren zum Ausweichen vor Hindernissen in dem automatischen Fahrzeugfahrvorgang nach einem der Ansprüche 1 bis 6, wobei das Bereitstellen des Straßenumgebungsmodells innerhalb des vorbestimmten Bereichs um das Fahrzeug umfasst:
Erfassen von Positionsinformationen des Fahrzeugs, einer Position und einer Größe des Hindernisses auf der aktuellen Fahrspur, und von Informationen zur Spurposition und Spurbreite innerhalb des vorbestimmten Bereichs um das Fahrzeug; und
Erzeugen des Straßenumgebungsmodells entsprechend den Positionsinformationen des Fahrzeugs, der Position und der Größe des Hindernisses auf der aktuellen Fahrspur, und den Informationen zur Spurposition und Spurbreite innerhalb des vorbestimmten Bereichs um das Fahrzeug.

8. System zum Ausweichen vor Hindernissen in dem automatischen Fahrzeugfahrvorgang, das aufweist:
ein Straßenumgebungsmodell-Bereitstellungsmodul, das dazu ausgebildet ist, ein Straßenumgebungsmodell innerhalb eines vorbestimmten Bereichs um das Fahrzeug bereitzustellen, wobei das Straßenumgebungsmodell eine Spurposition, eine Spurbreite, und eine Größe und eine Position des Hindernisses innerhalb des vorbestimmten Bereichs um das Fahrzeug umfasst; und ein Steuermodul, das ausgebildet ist, wenn eine Vielzahl von Hindernissen innerhalb des vorbestimmten Bereichs auf einer aktuellen Fahrspur entsprechend dem Straßenumgebungsmodell bestimmt wird, zum Erfassen, entsprechend dem Straßenumgebungsmodell, einer Position und einer Größe eines ersten angrenzenden Hindernisses, einer Position und einer Größe eines zweiten angrenzenden Hindernisses, einer Breite der aktuellen Fahrspur, und einer Hindernisentfernung zwischen dem ersten angrenzenden Hindernis und dem zweiten angrenzenden Hindernis in einer Fahrtrichtung der aktuellen Fahrspur und zum Erfassen einer Geschwindigkeit des Fahrzeugs; zum Bestimmen, ob das Fahrzeug das erste angrenzende Hindernis und das zweite angrenzende Hindernis umfahren kann, um auf der Fahrspur zu fahren, entsprechend der Position und der Größe des ersten angrenzenden Hindernisses, der Position und der Größe des zweiten angrenzenden Hindernisses, der Geschwindigkeit des Fahrzeugs, und der Hindernisentfernung; und zum Steuerung des Fahrzeugs zum Ausweichen vor dem Hindernis entsprechend einem Bestimmungsergebnis,
wobei das erste angrenzende Hindernis ein Hindernis ist, das dem Fahrzeug in der Fahrtrichtung der aktuellen Fahrspur am nächsten ist, und das zweite angrenzende Hindernis ein Hindernis ist, das dem ersten angrenzenden Hindernis in der Fahrtrichtung der aktuellen Fahrspur am nächsten ist;
**dadurch gekennzeichnet, dass** Steuermodul ferner für Folgendes ausgebildet ist:
Erfassen einer umfassende Durchgangsbreite entsprechend der Position und der Größe des ersten angrenzenden Hindernisses, der Position und der Größe des zweiten angrenzenden Hindernisses, und der Breite der aktuellen Fahrspur; und Steuern des Fahrzeugs so, dass es zwischen dem ersten angrenzenden Hindernis und dem zweiten angrenzenden Hindernis gerade fährt, wenn die umfassende Durchgangsbreite größer als eine zweite vorbestimmte sichere Durchgangsbreite ist;
wobei, wenn das erste angrenzende Hindernis und das zweite angrenzende Hindernis beide in der Nähe einer gleichen Seite der aktuellen Fahrspur liegen, die umfassende Durchgangsbreite ein kleinerer Wert einer Durchgangsbreite am ersten angrenzenden Hindernis und einer Durchgangsbreite am zweiten angrenzenden Hindernis ist; und wenn das erste angrenzende Hindernis und das zweite angrenzenden Hindernis in der Nähe von unterschiedlichen Seiten der aktuellen Fahrspur liegen, die umfassende Durchgangsbreite eine kürzeste Entfernung zwischen dem ersten angrenzenden Hindernis und dem zweiten angrenzenden Hindernis in einer von links nach rechts verlaufenden Richtung der aktuellen Fahrspur ist.

9. System zum Ausweichen vor Hindernissen in dem automatischen Fahrzeugfahrvorgang nach Anspruch 8, wobei das Steuermodul ferner dazu ausgebildet ist, das Fahrzeug zum Ausweichen vor dem ersten angrenzenden Hindernis und dem zweiten angrenzenden Hindernis zu steuern, um auf der aktuellen Fahrspur zu fahren, wenn das Fahrzeug das erste angrenzende Hindernis und das zweite angrenzende Hindernis auf der aktuelle Fahrspur umfahren kann, wobei das Steuermodul ferner dazu ausgebildet ist, das Fahrzeug zum Wechseln einer Spur zu steuern, um dem Hindernis auszuweichen, wenn das Fahrzeug das erste angrenzende Hindernis und das zweite angrenzende Hindernis umfahren kann, um auf der aktuellen Fahrspur zu fahren.

10. System zum Ausweichen vor Hindernissen in dem automatischen Fahrzeugfahrvorgang nach einem der Ansprüche 8 bis 9, wobei das Steuermodul ferner ausgebildet ist zum Erfassen einer Durchgangsbreite an dem ersten angrenzenden Hindernis entsprechend der Position und der Größe des ersten angrenzenden Hindernisses und der Breite der aktuellen Fahrspur; zum Bestimmen, dass das Fahrzeug das erste angrenzende Hindernis und das zweite angrenzende Hindernis nicht umfahren kann, um auf der aktuellen Fahrspur zu fahren, wenn die Durchgangsbreite an dem ersten angrenzenden Hindernis kleiner als die erste vorbestimmte sichere Durchgangsbreite ist; zum Erfassen einer Durchgangsbreite an dem zweiten angrenzenden Hindernis entsprechend der Position und der Größe des zweiten angrenzenden Hindernisses und der Breite der aktuellen Fahrspur, wenn die Durchgangsbreite an dem ersten angrenzenden Hindernis größer als die erste vorbestimmte sichere Durchgangsbreite ist; zum Bestimmen, dass das Fahrzeug das erste angrenzende Hindernis und das zweite angrenzende Hindernis nicht umfahren kann, um auf der aktuellen Fahrspur zu fahren, wenn die Durchgangsbreite an dem zweiten angrenzenden Hindernis kleiner als die erste vorbestimmte sichere Durchgangsbreite ist; zum Erfassen einer Position des Fahrzeugs, das an dem ersten angrenzenden Hindernis vorbeifährt, und einer Position des Fahrzeugs, das an dem zweiten angrenzenden Hindernis vorbeifährt, wenn die Durchgangsbreite an dem zweiten angrenzenden Hindernis größer als die erste vorbestimmte sichere Durchgangsbreite ist; zum Bestimmen, ob das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann, entsprechend der Position des Fahrzeugs, das an dem ersten angrenzenden Hindernis vorbeifährt, der Position des Fahrzeugs, das an dem zweiten angrenzenden Hindernis vorbeifährt, der Geschwindigkeit des Fahrzeugs, und der Hindernisentfernung; zum Bestimmen, dass das Fahrzeug das erste angrenzende Hindernis und das zweite angrenzende Hindernis umfahren kann, um auf der aktuellen Fahrspur zu fahren, wenn das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann; und zum Bestimmen, dass das Fahrzeug das erste angrenzende Hindernis und das zweite angrenzende Hindernis nicht umfahren kann, um auf der aktuellen Fahrspur zu fahren, wenn das Fahrzeug nicht von der Position des Fahrzeugs, das an dem ersten angrenzenden Hindernis vorbeifährt, zur Position des Fahrzeugs, das an dem zweiten angrenzenden Hindernis vorbeifährt, fahren kann.

11. System zum Ausweichen vor Hindernissen in dem automatischen Fahrzeugfahrvorgang nach Anspruch 10, wobei das Steuermodul ferner ausgebildet ist zum Festlegen der Position des Fahrzeugs, das an dem ersten angrenzenden Hindernis vorbeifährt, als einen Startpunkt, und der Position des Fahrzeugs, das an dem zweiten angrenzenden Hindernis vorbeifährt, als einen Endpunkt; zum Bestimmen, ob das Fahrzeug mit einer konstanten Geschwindigkeit oder einer reduzierten Geschwindigkeit vom Startpunkt zum Endpunkt in der Hindernisentfernung fahren kann; zum Bestimmen, dass das Fahrzeug von der Position des Fahrzeugs, das an dem ersten angrenzenden Hindernis vorbeifährt, zur Position des Fahrzeugs, das an dem zweiten angrenzenden Hindernis vorbeifährt, fahren kann, wenn das Fahrzeug mit der konstanten Geschwindigkeit oder der reduzierten Geschwindigkeit vom Startpunkt zum Endpunkt in der Hindernisentfernung fahren kann; und zum Bestimmen, dass das Fahrzeug nicht von der Position des Fahrzeugs, das an dem ersten angrenzenden Hindernis vorbeifährt, zur Position des Fahrzeugs, das an dem zweiten angrenzenden Hindernis vorbeifährt, fahren kann, wenn das Fahrzeug nicht mit der konstanten Geschwindigkeit oder der reduzierte Geschwindigkeit vom Startpunkt zum Endpunkt in der Hindernisentfernung fahren kann.

12. System zum Ausweichen vor Hindernissen in dem automatischen Fahrzeugfahrvorgang nach einem der Ansprüche 8 bis 11, wobei das Steuermodul ferner ausgebildet ist, wenn sich ein Hindernis innerhalb des vorbestimmten Bereichs auf der aktuellen Fahrspur befindet, zum Erfassen einer Position und einer Größe des Hindernisses; zum Erfassen einer Durchgangsbreite an dem Hindernis entsprechend der Position und der Größe des Hindernisses und der Breite der aktuellen Fahrspur; und zum Steuern des Fahrzeugs zum Wechseln einer Spur, wenn die Durchgangsbreite am Hindernis kleiner als eine zweite vorbestimmte sichere Durchgangsbreite ist.

13. Fahrzeug, welches das System zum Ausweichen vor Hindernissen in dem automatischen Fahrzeugfahrvorgang nach einem der Ansprüche 8 bis 12 aufweist.

## Revendications

1. Procédé permettant d'éviter des obstacles dans un processus de conduite automatique de véhicule, comprenant :
la fourniture d'un modèle d'environnement routier au sein d'une plage prédéfinie autour d'un véhicule, dans lequel le modèle d'environnement routier comprend une position de voie, une largeur de voie, et une taille et une position des obstacles au sein de la plage prédéfinie autour du véhicule ;
dans un cas d'une pluralité d'obstacles au sein de la plage prédéfinie dans une voie de circulation actuelle, l'acquisition d'une position et d'une taille d'un premier obstacle adjacent, d'une position et d'une taille d'un second obstacle adjacent, d'une largeur de la voie de circulation actuelle, et d'une distance d'obstacle entre le premier obstacle adjacent et le second obstacle adjacent dans une direction de conduite de la voie de circulation actuelle, selon le modèle d'environnement routier ; et l'acquisition d'une vitesse du véhicule ;
le fait de déterminer si le véhicule est capable de contourner le premier obstacle adjacent et le second obstacle adjacent pour conduire dans la voie de circulation actuelle, selon la position et la taille du premier obstacle adjacent, la position et la taille du second obstacle adjacent, la vitesse du véhicule, et la distance d'obstacle ; et
la commande du véhicule pour éviter les obstacles selon un résultat de détermination,
dans lequel le premier obstacle adjacent est un obstacle le plus proche du véhicule dans la direction de conduite de la voie de circulation actuelle, et le second obstacle adjacent est un obstacle le plus proche du premier obstacle adjacent dans la direction de conduite de la voie de circulation actuelle ;
**caractérisé en ce que** le procédé comprend en outre :
l'acquisition d'une largeur de passage complète, selon la position et la taille du premier obstacle adjacent, la position et la taille du second obstacle adjacent et la largeur de la voie de circulation actuelle ;
la commande du véhicule pour conduire en ligne droite entre le premier obstacle adjacent et le second obstacle adjacent, dans un cas où la largeur de passage complète est supérieure à une deuxième largeur de passage sûre prédéfinie ;
dans lequel dans un cas où le premier obstacle adjacent et le second obstacle adjacent sont l'un et l'autre proches d'un même côté de la voie de circulation actuelle, la largeur de passage complète est une valeur plus petite d'une largeur de passage au niveau du premier obstacle adjacent et d'une largeur de passage au niveau du second obstacle adjacent ; et dans un cas où le premier obstacle adjacent et le second obstacle adjacent sont proches de côtés différents de la voie de circulation actuelle, la largeur de passage complète est une distance la plus courte entre le premier obstacle adjacent et le second obstacle adjacent dans une direction gauche-droite de la voie de circulation actuelle.

2. Procédé permettant d'éviter les obstacles dans le processus de conduite automatique de véhicule selon la revendication 1, dans lequel la commande du véhicule pour éviter l'obstacle selon un résultat de détermination comprend :
dans un cas où le véhicule est capable de contourner le premier obstacle adjacent et le second obstacle adjacent pour conduire dans la voie de circulation actuelle, la commande du véhicule pour éviter le premier obstacle adjacent et le second obstacle adjacent pour conduire dans la voie de circulation actuelle.

3. Procédé permettant d'éviter les obstacles dans le processus de conduite automatique de véhicule selon la revendication 1 ou 2, dans lequel la commande du véhicule pour éviter les obstacles selon un résultat de détermination comprend en outre :
dans un cas où le véhicule est incapable de contourner le premier obstacle adjacent et le second obstacle adjacent pour conduire dans la voie de circulation actuelle, la commande du véhicule pour changer de voie pour éviter l'obstacle.

4. Procédé permettant d'éviter les obstacles dans le processus de conduite automatique de véhicule selon l'une quelconque des revendications 1 à 3, dans lequel le fait de déterminer si le véhicule est capable de contourner le premier obstacle adjacent et le second obstacle adjacent pour conduire dans la voie de circulation actuelle, selon la position et la taille du premier obstacle adjacent, la position et la taille du second obstacle adjacent, la vitesse du véhicule, et la distance d'obstacle comprend en outre :
l'acquisition d'une largeur de passage au niveau du premier obstacle adjacent selon la position et la taille du premier obstacle adjacent et la largeur de la voie de circulation actuelle ;
la détermination que le véhicule est incapable de contourner le premier obstacle adjacent et le second obstacle adjacent pour conduire dans la voie de circulation actuelle, dans un cas où la largeur de passage au niveau du premier obstacle adjacent est inférieure à la première largeur de passage sûre prédéfinie ;
l'acquisition d'une largeur de passage au niveau du second obstacle adjacent selon la position et la taille du second obstacle adjacent et la largeur de la voie de circulation actuelle, dans un cas où la largeur de passage au niveau du premier obstacle adjacent est supérieure à la première largeur de passage sûre prédéfinie ;
la détermination que le véhicule est incapable de contourner le premier obstacle adjacent et le second obstacle adjacent pour conduire dans la voie de circulation actuelle, dans un cas où la largeur de passage au niveau du second obstacle adjacent est inférieure à une première largeur de passage sûre prédéfinie ;
l'acquisition d'une position du véhicule passant le premier obstacle adjacent et d'une position du véhicule passant le second obstacle adjacent, dans un cas où la largeur de passage au niveau du second obstacle adjacent est supérieure à la première largeur de passage sûre prédéfinie ;
le fait de déterminer si le véhicule est capable de conduire de la position du véhicule passant le premier obstacle adjacent à la position du véhicule passant le second obstacle adjacent, selon la position du véhicule passant le premier obstacle adjacent, la position du véhicule passant le second obstacle adjacent, la vitesse du véhicule, et la distance d'obstacle ;
la détermination que le véhicule est capable de contourner le premier obstacle adjacent et le second obstacle adjacent pour conduire dans la voie de circulation actuelle, dans un cas où le véhicule est capable de conduire de la position du véhicule passant le premier obstacle adjacent à la position du véhicule passant le second obstacle adjacent ; et
la détermination que le véhicule est incapable de contourner le premier obstacle adjacent et le second obstacle adjacent pour conduire dans la voie de circulation actuelle, dans un cas où le véhicule est incapable de conduire de la position du véhicule passant le premier obstacle adjacent à la position du véhicule passant le second obstacle adjacent.

5. Procédé permettant d'éviter les obstacles dans le processus de conduite automatique de véhicule selon la revendication 4, dans lequel le fait de déterminer si le véhicule est capable de conduire de la position du véhicule passant le premier obstacle adjacent à la position du véhicule passant le second obstacle adjacent, selon la position du véhicule passant le premier obstacle adjacent, la position du véhicule passant le second obstacle adjacent, la vitesse du véhicule, et la distance d'obstacle comprend en outre :
la définition de la position du véhicule passant le premier obstacle adjacent en guise de point de départ, et de la position du véhicule passant le second obstacle adjacent en guise de point final, et le fait de déterminer si le véhicule est capable de conduire à une vitesse constante ou à une vitesse réduite du point de départ au point final à la distance d'obstacle ;
la détermination que le véhicule est capable de conduire de la position du véhicule passant le premier obstacle adjacent à la position du véhicule passant le second obstacle adjacent, dans un cas où le véhicule est capable de conduire à la vitesse constante ou à la vitesse réduite du point de départ au point final à la distance d'obstacle ; et
la détermination que le véhicule est incapable de conduire du véhicule passant le premier obstacle adjacent au véhicule passant le second obstacle adjacent, dans un cas où le véhicule est incapable de conduire à la vitesse constante ou à la vitesse réduite du point de départ au point final à la distance d'obstacle.

6. Procédé permettant d'éviter les obstacles dans le processus de conduite automatique de véhicule selon l'une quelconque des revendications 1 à 5, dans lequel après la fourniture du modèle d'environnement routier au sein de la plage prédéfinie autour du véhicule, le procédé comprend en outre :
dans un cas d'un obstacle au sein de la plage prédéfinie dans la voie de circulation actuelle, l'acquisition d'une position et d'une taille de l'obstacle selon le modèle d'environnement routier, et l'acquisition d'une largeur de voie de la voie de circulation actuelle ;
l'acquisition d'une largeur de passage au niveau de l'obstacle selon la position et la taille de l'obstacle et la largeur de la voie de circulation actuelle ; et
la commande du véhicule pour éviter l'obstacle dans la voie de circulation actuelle, dans un cas où la largeur de passage au niveau de l'obstacle est supérieure à une troisième largeur de passage sûre prédéfinie.

7. Procédé permettant d'éviter les obstacles dans le processus de conduite automatique de véhicule selon l'une quelconque des revendications 1 à 6, dans lequel la fourniture du modèle d'environnement routier au sein de la plage prédéfinie autour du véhicule comprend en outre :
l'acquisition d'informations de position du véhicule, d'une position et d'une taille de l'obstacle dans la voie de circulation actuelle, et d'informations relatives à la position de voie et à la largeur de voie au sein de la plage prédéfinie autour du véhicule ; et
la génération du modèle d'environnement routier selon les informations de position du véhicule, la position et la taille de l'obstacle dans la voie de circulation actuelle, et les informations relatives à la position de voie et à la largeur de voie au sein de la plage prédéfinie autour du véhicule.

8. Système permettant d'éviter des obstacles dans un processus de conduite automatique de véhicule, comprenant :
un module de fourniture de modèle d'environnement routier configuré pour fournir un modèle d'environnement routier au sein d'une plage prédéfinie autour du véhicule, dans lequel le modèle d'environnement routier comprend une position de voie, une largeur de voie, et une taille et une position de l'obstacle au sein de la plage prédéfinie autour du véhicule ; et
un module de commande configuré pour, dans un cas où une pluralité d'obstacles au sein de la plage prédéfinie dans une voie de circulation actuelle est déterminée selon le modèle d'environnement routier, acquérir, selon le modèle d'environnement routier, une position et une taille d'un premier obstacle adjacent, une position et une taille d'un second obstacle adjacent, une largeur de la voie de circulation actuelle, et une distance d'obstacle entre le premier obstacle adjacent et le second obstacle adjacent dans une direction de conduite de la voie de circulation actuelle, et acquérir une vitesse du véhicule ; déterminer si le véhicule est capable de contourner le premier obstacle adjacent et le second obstacle adjacent pour conduire dans la voie de circulation actuelle, selon la position et la taille du premier obstacle adjacent, la position et la taille du second obstacle adjacent, la vitesse du véhicule, et la distance d'obstacle ; et commander le véhicule pour éviter l'obstacle selon un résultat de détermination,
dans lequel le premier obstacle adjacent est un obstacle le plus proche du véhicule dans la direction de conduite de la voie de circulation actuelle, et le second obstacle adjacent est un obstacle le plus proche du premier obstacle adjacent dans la direction de conduite de la voie de circulation actuelle ;
**caractérisé en ce que** le module de commande est configuré en outre pour
acquérir une largeur de passage complète, selon la position et la taille du premier obstacle adjacent, la position et la taille du second obstacle adjacent et la largeur de la voie de circulation actuelle ; et commander le véhicule pour conduire en ligne droite entre le premier obstacle adjacent et le second obstacle adjacent, dans un cas où la largeur de passage complète est supérieure à une deuxième largeur de passage sûre prédéfinie,
dans lequel dans un cas où le premier obstacle adjacent et le second obstacle adjacent sont l'un et l'autre proches d'un même côté de la voie de circulation actuelle, la largeur de passage complète est une valeur plus petite d'une largeur de passage au niveau du premier obstacle adjacent et d'une largeur de passage au niveau du second obstacle adjacent ; et dans un cas où le premier obstacle adjacent et le second obstacle adjacent sont proches de côtés différents de la voie de circulation actuelle, la largeur de passage complète est une distance la plus courte entre le premier obstacle adjacent et le second obstacle adjacent dans une direction gauche-droite de la voie de circulation actuelle.

9. Système permettant d'éviter les obstacles dans le processus de conduite automatique de véhicule selon la revendication 8, dans lequel le module de commande est configuré en outre pour commander le véhicule pour éviter le premier obstacle adjacent et le second obstacle adjacent pour conduire dans la voie de circulation actuelle, dans un cas où le véhicule est capable de contourner le premier obstacle adjacent et le second obstacle adjacent dans la voie de circulation actuelle, dans lequel le module de commande est configuré en outre pour commander le véhicule pour changer de voie pour éviter l'obstacle, dans un cas où le véhicule est incapable de contourner le premier obstacle adjacent et le second obstacle adjacent pour conduire dans la voie de circulation actuelle.

10. Système permettant d'éviter les obstacles dans le processus de conduite automatique de véhicule selon l'une quelconque des revendications 8 à 9, dans lequel le module de commande est configuré en outre pour acquérir une largeur de passage au niveau du premier obstacle adjacent selon la position et la taille du premier obstacle adjacent et la largeur de la voie de circulation actuelle ; déterminer que le véhicule est incapable de contourner le premier obstacle adjacent et le second obstacle adjacent pour conduire dans la voie de circulation actuelle, dans un cas où la largeur de passage au niveau du premier obstacle adjacent est inférieure à la première largeur de passage sûre prédéfinie ; acquérir une largeur de passage au niveau du second obstacle adjacent selon la position et la taille du second obstacle adjacent et la largeur de la voie de circulation actuelle, dans un cas où la largeur de passage au niveau du premier obstacle adjacent est supérieure à la première largeur de passage sûre prédéfinie ; déterminer que le véhicule est incapable de contourner le premier obstacle adjacent et le second obstacle adjacent pour conduire dans la voie de circulation actuelle, dans un cas où la largeur de passage au niveau du second obstacle adjacent est inférieure à la première largeur de passage sûre prédéfinie ; acquérir une position du véhicule passant le premier obstacle adjacent et une position du véhicule passant le second obstacle adjacent, dans un cas où la largeur de passage au niveau du second obstacle adjacent est supérieure à la première largeur de passage sûre prédéfinie ; déterminer si le véhicule est capable de conduire de la position du véhicule passant le premier obstacle adjacent à la position du véhicule passant le second obstacle adjacent, selon la position du véhicule passant le premier obstacle adjacent, la position du véhicule passant le second obstacle adjacent, la vitesse du véhicule, et la distance d'obstacle ; déterminer que le véhicule est capable de contourner le premier obstacle adjacent et le second obstacle adjacent pour conduire dans la voie de circulation actuelle, dans un cas où le véhicule est capable de conduire de la position du véhicule passant le premier obstacle adjacent à la position du véhicule passant le second obstacle adjacent ; et déterminer que le véhicule est incapable de contourner le premier obstacle adjacent et le second obstacle adjacent pour conduire dans la voie de circulation actuelle, dans un cas où le véhicule est incapable de conduire de la position du véhicule passant le premier obstacle adjacent à la position du véhicule passant le second obstacle adjacent.

11. Système permettant d'éviter les obstacles dans le processus de conduite automatique de véhicule selon la revendication 10, dans lequel le module de commande est configuré en outre pour définir la position du véhicule passant le premier obstacle adjacent en guise de point de départ, et la position du véhicule passant le second obstacle adjacent en guise de point final ; déterminer si le véhicule est capable de conduire à une vitesse constante ou à une vitesse réduite du point de départ au point final à la distance d'obstacle ; déterminer que le véhicule est capable de conduire de la position du véhicule passant le premier obstacle adjacent à la position du véhicule passant le second obstacle adjacent, dans un cas où le véhicule est capable de conduire à la vitesse constante ou à la vitesse réduite du point de départ au point final à la distance d'obstacle ; et déterminer que le véhicule est incapable de conduire de la position du véhicule passant le premier obstacle adjacent à la position du véhicule passant le second obstacle adjacent, dans un cas où le véhicule est incapable de conduire à la vitesse constante ou à la vitesse réduite du point de départ au point final à la distance d'obstacle.

12. Système permettant d'éviter les obstacles dans le processus de conduite automatique de véhicule selon l'une quelconque des revendications 8 à 11, le module de commande est configuré en outre pour, dans un cas d'un obstacle au sein de la plage prédéfinie dans la voie de circulation actuelle, acquérir une position et une taille de l'obstacle ; acquérir une largeur de passage au niveau de l'obstacle selon la position et la taille de l'obstacle et la largeur de la voie de circulation actuelle ; et commander le véhicule pour changer de voie, dans un cas où la largeur de passage au niveau de l'obstacle est inférieure à la deuxième largeur de passage sûre prédéfinie.

13. Véhicule, comprenant le système permettant d'éviter les obstacles dans le processus de conduite automatique de véhicule selon l'une quelconque des revendications 8 à 12.
